# EUROPÄISCHE PATENTSCHRIFT

(11) **EP 1 060 371 B1**
(45) Veröffentlichungstag und Bekanntmachung des Hinweises auf die Patenterteilung: **03.04.2002**
(21) Anmeldenummer: 98966664.9
(22) Anmeldetag: 22.12.1998
(51) Int. Cl.: G01L 1/18, G01L 3/10

(54) **HALBLEITER KRAFT/DREHMOMENTSENSOR**
SEMICONDUCTOR FORCE/TORQUE SENSOR
CAPTEUR DE FORCE/COUPLE DE ROTATION A SEMI-CONDUCTEURS

(30) Priorität: 03.03.1998 DE 19808928
(43) Veröffentlichungstag der Anmeldung: 20.12.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: DORSCH, Bernd, D-91364 Unterleinleiter (DE); HOHE, Hans-Peter, D-91332 Heiligenstadt (DE); SEITZER, Dieter, D-91054 Erlangen (DE)
(74) Vertreter: Schoppe, Fritz, Dipl.-Ing.
(86) Internationale Anmeldenummer: EP9808413
(87) Internationale Veröffentlichungsnummer: WO9945349

(56) Entgegenhaltungen:
- EP-A- 0 024 035
- EP-A- 0 303 875
- EP-A- 0 647 832
- US-A- 3 145 563
- US-A- 3 251 222
- US-A- 3 585 415

## Beschreibung

Die vorliegende Erfindung bezieht sich auf einen Kraft/Drehmomentsensor und insbesondere auf einen monolithisch integrierten Kraft/Drehmomentsensor.

Aus dem Stand der Technik ist eine Vielzahl von Kraftsensoren bekannt. Bekannte, monolithisch integrierte Kraftsensoren arbeiten auf der Grundlage des piezoelektrischen Effekts. Derartige Sensoren umfassen einen Piezowandler, der eine Kraft, mit der derselbe beaufschlagt wird, in eine Spannung umwandelt. Somit kann durch das Abgreifen dieser Spannung ein die ausgeübte Kraft anzeigendes Sensorsignal gewonnen werden.

Aus der US-A-3145563 ist ein piezoresistiver Wandler als Kraftsensor bekannt, der die im Oberbegriff des Anspruchs 1 definieren Merkmale aufweist.

Der vorliegenden Erfindung liegt die Aufgabe zugrunde, einen neuartigen monolithisch integrierten Kraft/Drehmomentsensor mit einer verbesserten Empfindlichkeit und einem verbesserten Ansprechen zu schaffen.

Diese Aufgabe wird durch einen monolithisch integrierten Kraft/Drehmomentsensor gemäß Anspruch 1 gelöst.

Die vorliegende Erfindung schafft einen Kraft/Drehmomentsensor, der ein mit einer Kraft oder einem Drehmoment beaufschlagbares Halbleitergebiet aufweist. Zwei Steuerelektroden sind auf einer ersten und einer zweiten Seite des Halbleitergebiets angeordnet, wobei sich die erste und die zweite Seite beabstandet voneinander gegenüberliegen. Zwischen den Steuerelektroden ist ein Strom erzeugbar. Ferner sind zwei Sensorelektroden vorgesehen, die auf einer dritten und einer vierten Seite des Halbleitergebiets angeordnet sind, wobei sich die dritte und die vierte Seite beabstandet voneinander gegenüberliegen. Eine auf das Halbleitergebiet ausgeübte Kraft oder ein auf dasselbe ausgeübtes Drehmoment ist bei einem Stromfluß zwischen den Steuerelektroden durch das Abgreifen einer zwischen den Sensorelektroden vorliegenden Spannung erfaßbar. Das Halbleitergebiet ist durch den Kanal eines Feldeffekttransistors gebildet, wobei die Drain-Elektrode und die Source-Elektrode desselben als die beiden Steuerkontakte dienen.

Die vorliegende Erfindung basiert auf der Erkenntnis, daß durch eine Krafteinwirkung auf das Halbleitergebiet parallel zur Dilationsrichtung, d.h. der Richtung, in der die Atomabstände durch eine Krafteinwirkung vergrößert werden, eine Richtung niedrigeren Widerstands entsteht. Durch diese Richtung eines niedrigeren Widerstands wird eine Ablenkung des zwischen den beiden Steuerelektroden vorliegenden Stroms bewirkt. Bei einer geeigneten Ausrichtung dieser Richtung des niedrigeren Widerstands zwischen den beiden Sensorkontakten, die sich auf der dritten und der vierten Seite des Halbleitergebiets befinden, werden nun an der dritten und der vierten Seite jeweils Ladungen entgegengesetzter Polarität erzeugt, die als Spannungsdifferenz zwischen den Sensorkontakten gemessen werden können.

Bei dem erfindungsgemäßen Kraft/Drehmomentsensor ist mittels der Drain-Elektrode, der Source-Elektrode und der Gate-Elektrode ist ein geeigneter Drainstrom, d.h. ein geeigneter Strom zwischen den beiden Steuerkontakten, einstellbar. An den gegenüberliegenden Längsseiten des Kanalgebiets, wobei das Kanalgebiet als das Halbleitergebiet des erfindungsgemäßen Sensors dient, sind zusätzlich die Sensorkontakte angebracht.

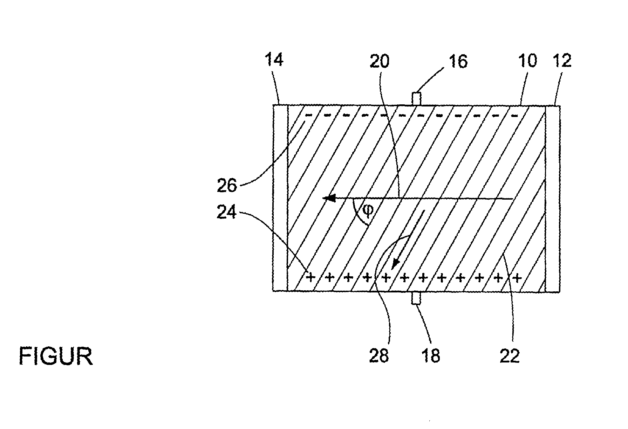

Bevorzugte Ausführungsbeispiele der vorliegenden Erfindung werden nachfolgend teilweise bezugnehmend auf die beiliegende Zeichnung näher erläutert.

Die einzige Figur zeigt eine schematische Darstellung eines bevorzugten Ausführungsbeispiels des erfindungsgemäßen Sensors.

Der erfindungsgemäße Sensor weist bei dem dargestellten Ausführungsbeispiel desselben ein dotiertes Halbleitergebiet 10 mit einer im wesentlichen rechteckigen Form auf. An zwei gegenüberliegenden Seitenflächen des Halbleitergebiets 10 sind Elektroden 12 und 14 vorgesehen, die als Steuerkontakte dienen. Wie in der Figur dargestellt ist, sind die Steuerkontakte 12 und 14 beabstandet voneinander angeordnet, wobei das Halbleitergebiet 10 zwischen denselben angeordnet ist. Elektroden 16 und 18, die als Sensorelektroden dienen, sind auf sich ebenfalls gegenüberliegenden Seitenflächen des Halbleitergebiets 10 angeordnet. Bei dem dargestellten Ausführungsbeispiel sind die Seitenflächen, auf denen sich die Sensorkontakte 16 und 18 befinden, zu den Seitenflächen, auf denen sich die Steuerkontakte 12 und 14 befinden, in einem Winkel von im wesentlichen 90° angeordnet. Somit verbinden die Seitenflächen, auf denen die Sensorkontakte 16 und 18 angeordnet sind, die Seitenflächen, auf denen die Steuerkontakte 12 und 14 angeordnet sind.

Es ist jedoch offensichtlich, daß die oben beschriebene Anordnung beispielhaft ist, wobei andere geeignete Anordnungen verwendet werden können, wobei das Halbleitergebiet eine nahezu beliebige Geometrie aufweisen kann, solange zwei voneinander beabstandete Seitenflächen gebildet sind, auf denen die Steuerkontakte angeordnet sind, sowie voneinander beabstandete Seitenflächen, auf denen die Sensorkontakte angeordnet sind.

Nachfolgend wird die Funktionsweise des erfindungsgemäßen Sensors anhand des in der Figur dargestellten Beispiels erläutert.

Die zwei gegenüberliegenden Steuerkontakte 12 und 14 werden mit einer geeigneten Steuerspannung oder einem geeigneten Steuerstrom betrieben, um einen Stromfluß durch das dotierte Halbleitergebiet 10 zu bewirken. Dieser Stromfluß ist durch den Pfeil 20 in der Figur angezeigt. Wirkt nun eine Kraft auf das Halbleitergebiet 10 ein, entsteht in dem Halbleitergebiet parallel zur Dilationsrichtung, d.h. der Richtung, in der die Atomabstände durch eine Krafteinwirkung vergrößert werden, eine Richtung eines niedrigeren Widerstands, die bei einer geeigneten Ausrichtung eine Ablenkung des durch das Halbleitergebiet 10 fließenden Stroms 20 bewirkt. Die Dilationsrichtung hängt dabei von der Richtung der auf das Halbleitergebiet einwirkenden Kraft sowie der Art dieser Kraft ab. In der Figur sind bei 22 die Linien des geringeren Widerstands dargestellt.

Durch die Ablenkung des Stromflusses 20 in dem Halbleitergebiet 10 werden an den Rändern des Halbleitergebiets 10, an denen die Sensorkontakte 16 und 18 angebracht sind, Ladungen 24 und 26 erzeugt. Beispielsweise werden an der Seite des Sensorkontakts 18 positive Ladungen 24 erzeugt, während an der Seite des Sensorkontakts 16 negative Ladungen 26 erzeugt werden. Die angestrebte Stromrichtung zur Erzeugung dieser Ladungen 24 und 26 ist bei 28 dargestellt und verläuft entlang der Linien geringeren Widerstands 22.

Die an den Rändern des Halbleitergebiets 10 erzeugten Ladungen 24 und 26 können über die Sensorkontakte 16 und 18 als Spannungsdifferenz und somit als Ausgangssignal des erfindungsgemäßen Kraft/Drehmomentsensors abgegriffen werden. Der zwischen der ursprünglichen Stromrichtung 20 und der Dilationsrichtung, die durch die Linien geringeren Widerstands 22 dargestellt ist, gebildete Winkel ϕ beeinflußt die Größe des Ausgangssignals. Der Effekt, der dem erfindungsgemäßen Kraft/Drehmomentsensor zugrundeliegt, ist bei einem Winkel ϕ von 45° am größten, während derselbe bei einer Annäherung an 0° oder 90° gegen Null geht. Die Beaufschlagbarkeit des Halbleitergebiets mit einer Kraft wird daher vorteilhaft derart gewählt, daß der Winkel ϕ zwischen der Dilationsrichtung des Halbleitergebiets und dem Stromfluß im wesentlichen 45° beträgt. Somit ist eine möglichst große Empfindlichkeit mittels des erfindungsgemäßen Kraft/Drehmomentsensors erreichbar.

Alternativ zu dem oben bezugnehmend auf die Figur erläuterten Ausführungsbeispiel kann der erfindungsgemäße Sensor mittels eines Feldeffekttransistors realisiert werden. Dabei ist das Halbleitergebiet durch den Kanal des Feldeffekttransistors gebildet. Die Drain-Elektrode und die Source-Elektrode bilden die beiden Steuerkontakte. Über diese Steuerkontakte sowie die Gate-Elektrode des Feldeffekttransistors wird ein geeigneter Drainstrom erzeugt. Ferner sind an gegenüberliegenden Längsseiten des Kanalgebiets zusätzlich Sensorkontakte angebracht. Wiederum bewirkt eine Krafteinwirkung auf den Feldeffektransistor, d.h. auf den Kanal desselben, parallel zur Dilationsrichtung verlaufende Linien eines niedrigeren Widerstands, die eine Ablenkung des Drainstroms und somit eine Ansammlung von Ladungen an den Rändern des Kanals bewirken. Diese Ladungen können wiederum über die Sensorkontakte abgegriffen werden, um das Sensorausgangssignal zu erzeugen.

Geeignete Schaltungsanordnungen zum Erzeugen der Treiberströme bzw. zum Erfassen des Ausgangssignals der erfindungsgemäßen monolithisch integrierten Kraft/Drehmomentsensoren sind für Fachleute offensichtlich. Die Ausgangsspannung des erfindungsgemäßen Kraft/Drehmomentsensors ist proportional zu der ausgeübten Kraft, bzw. zu einem angelegten Drehmoment, so daß eine einfache Verarbeitungsschaltung zur Auswertung des Ausgangssignals verwendet werden kann. Ferner ist der monolithisch integrierte Kraft/Drehmomentsensor gemäß der vorliegenden Erfindung ohne weiteres unter Verwendung von Verfahren der Halbleitertechnologie herstellbar und kann bedarfsweise integriert mit einer Elektronik in einer integrierten Schaltung realisiert werden.

## Patentansprüche

1. Monolithisch integrierter Kraft/Drehmomentsensor mit
einem mit einer Kraft oder einem Drehmoment beaufschlagbaren Halbleitergebiet (10);
zwei Steuerelektroden (12, 14), die auf einer ersten und einer zweiten Seite des Halbleitergebiets (10), die sich beabstandet voneinander gegenüberliegen, angeordnet sind, wobei zwischen den Steuerelektroden ein Strom (20) durch das Halbleitergebiet erzeugbar ist;
zwei Sensorelektroden (16, 18), die auf einer dritten und auf einer vierten Seite des Halbleitergebiets (10), die sich beabstandet voneinander gegenüberliegen, angeordnet sind, wobei die dritte und die vierte Seite im wesentlichen senkrecht zu der ersten und der zweiten Seite angeordnet sind,
wobei eine auf das Halbleitergebiet (10) ausgeübte Kraft oder ein auf dasselbe ausgeübtes Drehmoment bei einem Stromfluß (20) zwischen den Steuerelektroden (12, 14) durch das Abgreifen einer zwischen den Sensorelektroden (16, 18) vorliegenden Spannung erfaßbar ist,
**dadurch gekennzeichnet, daß** das Halbleitergebiet (10) durch den Kanal eines Feldeffekttransistors gebildet ist, wobei die Drain- und die Source-Elektrode des Feldeffekttransistors die Steuerelektroden (12, 14) bilden.

2. Monolithisch integrierter Kraft/Drehmomentsensorgemäß Anspruch 1, bei dem das Halbleitergebiet (10) dotiert ist.

3. Monolithisch integrierter Kraft/Drehmomentsensor gemäß Anspruch 1 oder 2, bei dem die Beaufschlagbarkeit des Halbleitergebiets (10) mit einer Kraft derart ist, daß ein Winkel (ϕ) zwischen der Dilationsrichtung des Halbleitergebiets (10) und dem Stromfluß im wesentlichen 45° beträgt.

## Claims

1. A monolithically integrated force/torque sensor comprising:
a semiconductor region (10) which is adapted to be subjected to a force or torque;
two control electrodes (12, 14) which are provided on a first and a second side of the semiconductor region (10), said sides being arranged in spaced, opposed relationship with one another, and a current (20) through the semiconductor region being producible between said control electrodes;
two sensor electrodes (16, 18) which are provided on a third and a fourth side of the semiconductor region (10), said third and fourth sides being arranged in spaced, opposed relationship with one another and extending essentially at right angles to said first and second sides,
a force or torque applied to the semiconductor region (10) being determinable by detecting a voltage present between the sensor electrodes (16, 18) when a current (20) flows between the control electrodes (12, 14),
**characterized in that** said semiconductor region (10) is formed by the channel of a field effect transistor, the drain and source electrodes of said field effect transistor defining the control electrodes (12, 14).

2. A monolithically integrated force/torque sensor according to claim 1, wherein the semiconductor region (10) is doped.

3. A monolithically integrated force/torque sensor according to claim 1 or 2, wherein the subjectibility of the semiconductor region (10) to a force is such that an angle (ϕ) between the direction of dilation of the semiconductor region (10) and the flow of current is essentially 45°.

## Revendications

1. Capteur de force/couple de rotation intégré monolithiquement, avec
une zone à semi-conducteur (10) pouvant être soumis à une force ou à un couple de rotation ;
deux électrodes de commande (12, 14) disposées sur un premier et sur un second côté de la zone à semi-conducteur (10), lesquelles sont opposées l'une à l'autre et à une distance entre elles, entre les électrodes de commande pouvant être généré un courant (20) par la zone à semi-conducteur ;
deux électrodes de détection (16, 18) disposées sur un troisième et sur un quatrième côté de la zone à semi-conducteur (10), lesquelles sont opposées l'une à l'autre et à une distance entre elles, les troisième et quatrième côtés étant disposés sensiblement perpendiculairement aux premier et second côtés,
une force exercée sur la zone à semi-conducteur (10) ou un couple de rotation exercé sur cette dernière lors d'une circulation de courant (20) entre les électrodes de commande (12, 14) pouvant être capté(e) en captant une tension présente entre les électrodes de détection (16, 18),
**caractérisé par le fait que** la zone à semi-conducteur (10) est formée par le canal d'un transistor à effet de champ, l'électrode de drain et l'électrode de source du transistor à effet de champ constituant les électrodes de commande (12, 14).

2. Capteur de force/couple de rotation intégré monolithiquement selon la revendication 1, dans lequel la zone à semi-conducteur (10) est dopée.

3. Capteur de force/couple de rotation intégré monolithiquement selon la revendication 1 ou 2, dans lequel l'aptitude de la zone à semi-conducteur (10) à être soumise à une force est telle qu'un angle (ϕ) entre la direction de dilatation de la zone à semi-conducteur (10) et la circulation de courant est sensiblement de 45°.
